# EUROPÄISCHE PATENTANMELDUNG

(11) **EP 2 600 127 A2**
(43) Veröffentlichungstag der Anmeldung: **05.06.2013**
(21) Anmeldenummer: 12004902.8
(22) Anmeldetag: 30.06.2012
(51) Int. Cl.: G01K 3/10, G01K 1/02

(54) **Elektrisches Installationsgerät zur Ermittlung und Anzeige eines Temperaturzustandes**

(30) Priorität: 21.07.2011 DE 102011108210
(71) Anmelder: ABB AG, 68309 Mannheim (DE)
(72) Erfinder: Schallenberg, Wolfgang, 40599 Düsseldorf (DE); Wieske, Stefan, 58285 Gevelsberg (DE); Lehnert, Christian, 58239 Schwerte (DE)

(57) **Zusammenfassung**

Es wird ein elektronisches Installationsgerät (1, 2, 3, 4, 5, 6, 7) zur Ermittlung und Anzeige des aktuellen Temperaturzustandes in einem Raum oder in einem Gebäude vorgeschlagen
● mit mindestens einem im Installationsgerät integrierten Temperatursensor (14) oder mindestens einer Erfassungs-Schnittstelle (18) zum Anschluss mindestens eines externen Temperatursensors / eines externen Erfassungsgerätes (36) oder einer an ein Netzwerk/Bussystem (32) anschließbaren Busanbindung (29) zum Anschluss mindestens eines externen Temperatursensors / eines externen Erfassungsgerätes (36),
● mit mindestens einer Steuerlogik/Auswertung/Verarbeitung (22, 27) zur Auswertung von permanent vom Temperatursensor (14) oder Erfassungsgerät (36) empfangenen Temperaturwerten zur Ermittlung eines auf der zeitlichen Entwicklung der Temperaturwerte über einen definierten Zeitraum basierenden aktuellen Temperaturzustandes des Raumes oder des Gebäudes, welcher ausdrückt, ob sich der Raum oder das Gebäude gerade o in einer Abkühlungsphase mit fallender Temperatur oder o in einer Aufheizphase mit steigender Temperatur oder
o am oberen Temperatur-Umkehrpunkt mit Übergang von der Aufheizphase zur Abkühlungsphase oder
o am unteren Temperatur-Umkehrpunkt mit Übergang von der Abkühlungsphase zur Aufheizphase befindet,

● und mit einer Anzeigeeinheit (15) zur Visualisierung des ermittelten Temperaturzustandes.

## Beschreibung

Die Erfindung betrifft ein elektronisches Installationsgerät zur Ermittlung und Anzeige eines Temperaturzustandes und damit eine optische Rückmeldung für spezielle Temperatursteuerungsfunktionen und Temperaturzustände im Bereich HVAC (Heating, Ventilation, Air and Cooling) sowie in der HVAC- und/oder Gebäudesystemtechnik allgemein. Anwendungen des elektronischen Installationsgerätes können z. B. im Raum- und Gebäudebereich, in Konferenzräumen und in Wohn-, Arbeits-, Küchenbereichen erfolgen.

Es sind HVAC Systeme bekannt, die die Regelung der Raum- und Gebäudetemperatur übernehmen. Je nach geografischer Lage, Beschaffenheit und Komfort der Gebäude sind diese Systeme in der Lage, Wärme und/oder Kälte zu erzeugen. Die primäre Aufgabe besteht in der Einhaltung einer vorgegebenen Raum- und/oder Gebäudetemperatur. Durch den Einsatz von erzeugter Wärme und/oder Kälte wird einer nicht wünschenswerten zeitlichen Raumtemperaturentwicklung und/oder Gebäudetemperaturentwicklung entgegengewirkt. Im Wesentlichen arbeiten diese HVAC Systeme über einen Regelalgorithmus, der anhand einer vorgegebenen Solltemperatur die Raum- und/oder Gebäudetemperatur konstant halten soll. Ein Temperaturregler übernimmt dabei in der Regel die Steuerungsfunktion je Raum und/oder je Gebäude. Die Einstellung der Regelparameter erfolgt entweder zentral durch einen Zentralregler oder dezentral durch einen Raumtemperaturregler. In der Regel ist die Solltemperatur durch den Benutzer frei einstellbar, um sie den jeweiligen Bedürfnissen des Benutzers anzupassen. In einigen Fällen kann diese Funktion jedoch auch fest parametriert sein, wie beispielsweise in öffentlichen Gebäuden oder Bürogebäuden.

Eine für den Benutzer zur Verfügung gestellte Rückmeldung über das aktuelle Regelverhalten kann auf unterschiedliche Art und Weise erfolgen:
- über ein Bedienelement, z. B. einen Drehknopf mit Temperaturskala, z. B. Soll-Temperaturskala;
- über eine Anzeige/Display auf dem Regler: angezeigte Ist-Temperatur;
- über eine Anzeige/Display auf dem Regler: angezeigte Soll-Temperatur;
- über eine Anzeige/Display auf dem Regler: angezeigte Heiz- und/oder Kühlfunktion;
- über beliebige Kombinationen vorstehender Möglichkeiten.

Den allgemein bekannten Temperaturreglern haftet der Nachteil an, dass ein einfacher manueller Eingriff in die Regelung für den Benutzer nur schwer erkennbar ist. Der Regelalgorithmus ist durch den Benutzer in der Regel nicht nachvollziehbar. Eine Orientierung erfolgt anhand der zur Verfügung stehenden Informationen, welche sich auf Ist- und Solltemperatur und in einigen Fällen zusätzlich auf eine Heiz- und/oder Kühlfunktion am Regler beschränken. Diese Informationen liefern Momentanwerte. Der zeitliche Aspekt ist nicht gegeben. Ein direkter Zusammenhang zwischen dem persönlichen Wärmebedarf und/oder Kältebedarf (Raumklima) kann nur aus der eingeständigen Kombinatorik der zur Verfügung gestellten Momentanwerte und in der Regel aus dem aktuellen vorherrschenden Raum- und/oder Gebäudeklima abgeleitet werden. Somit ist dem Benutzer nicht direkt aus den Momentanwerten ersichtlich, ob die parametrisierten Werte seinem Wohlbefinden entsprechen, weil nicht erkennbar ist, ob sich der Raum und/oder das Gebäude gerade in einer Aufheiz- oder Abkühlungsphase befindet.

Der Erfindung liegt die Aufgabe zu Grunde, ein den zeitlichen Aspekt bei der Temperaturentwicklung berücksichtigendes elektronisches Installationsgerät zur Ermittlung und Anzeige eines Temperaturzustandes anzugeben.

Diese Aufgabe wird erfindungsgemäß gelöst durch ein elektronisches Installationsgerät zur Ermittlung und Anzeige des aktuellen Temperaturzustandes in einem Raum oder in einem Gebäude
- mit mindestens einem im Installationsgerät integrierten Temperatursensor oder mindestens einer Erfassungs-Schnittstelle zum Anschluss mindestens eines externen Temperatursensors / eines externen Erfassungsgerätes oder einer an ein Netzwerk/Bussystem anschließbaren Busanbindung zum Anschluss mindestens eines externen Temperatursensors / eines externen Erfassungsgerätes,
- mit mindestens einer Steuerlogik/Auswertung/Verarbeitung zur Auswertung von permanent vom Temperatursensor oder Erfassungsgerät empfangenen Temperaturwerten zur Ermittlung eines auf der zeitlichen Entwicklung der Temperaturwerte über einen definierten Zeitraum basierenden aktuellen Temperaturzustandes des Raumes oder des Gebäudes, welcher ausdrückt, ob sich der Raum oder das Gebäude gerade
   ○ in einer Abkühlungsphase mit fallender Temperatur oder
   ○ in einer Aufheizphase mit steigender Temperatur oder
   ○ am oberen Temperatur-Umkehrpunkt mit Übergang von der Aufheizphase zur Abkühlungsphase oder
   ○ am unteren Temperatur-Umkehrpunkt mit Übergang von der Abkühlungsphase zur Aufheizphase befindet,
- und mit einer Anzeigeeinheit zur Visualisierung des ermittelten Temperaturzustandes

Dabei kann das elektronische Installationsgerät auch in einen Anzeigeteil und eine hiervon separierbare, in eine UP-Dose montierbare UP-Einheit aufgeteilt werden, wobei beide Einheiten mittels Spannungsschnittstellen und Datenschnittstellen miteinander verbindbar sind.

Vorzugsweise weist das elektronische Installationsgerät ein Bedienelement auf, um beispielsweise Daten einzugeben oder um die Anzeige individuell entsprechend dem Anwendungsfall und dem Einsatzort einzurichten.

Das elektronische Installationsgerät kann zusätzlich einen Lautsprecher aufweisen, um die visuelle Anzeige akustisch zu ergänzen.

Das elektronische Installationsgerät kann mindestens einen Schaltausgang aufweisen, um in Abhängigkeit des aktuellen Temperaturzustandes externe Schaltvorgänge auszulösen, beispielsweise das Einschalten oder Ausschalten eines Ventilators.

Das elektronische Installationsgerät weist zweckmäßig mindestens ein Netzteil zum Anschluss einer externen Spannungsversorgung oder einer Spannungsversorgung über Busspannung auf.

Die mit der Erfindung erzielbaren Vorteile bestehen insbesondere darin, dass dem Benutzer die aktuell vorliegende Raum- oder Gebäudetemperaturänderung, d. h. HVAC Raum- oder Gebäudetemperaturphasen, in Form einer einfachen optischen Rückmeldung angezeigt wird. Damit wird die Temperaturanzeige von einer Momentaufnahme - die ebenfalls noch an Zahlenwerte gebunden ist - auf eine relative, farbige Trendanzeige verlagert, welche einfach und allgemein zu verstehen ist. Durch diese einfache und intuitive auf einer Rückmeldung basierenden Wahrnehmung wird es dem Benutzer ermöglicht, schnell, wirkungsvoll und zuverlässig Eingriffe in die Raum- und Gebäudetemperatursteuerung vorzunehmen.

Die Erfindung unterstützt damit auch eigene Maßnahmen zur Energieeffizienz in Gebäuden, indem sie dem Benutzer auf eine sehr einfache und allgemein verständliche Art und Weise transparent macht, wie der Einsatz von Primärenergie aktuell Verwendung findet in Bezug auf die parametrierte Solltemperatur, d. h. die gewünschte Temperatur, die aktuelle Raum- oder Gebäudetemperatur und deren zeitliche Entwicklung. Über diese Rückmeldung wird dem Benutzer vermittelt, wann ein manueller Eingriff in die Regelung betreffend Heizung / Klimatisierung / Lüftung erfolgen kann oder sollte, um die persönlichen Bedürfnisse in Bezug auf das Raum- und Gebäudeklima in Einklang mit der Energieeffizienz für die Heizung / Klimatisierung des Raums oder Gebäudes zu bringen, z.B. durch Änderung der Solltemperatur, durch frühzeitigeres Absenken oder Anheben der Solltemperatur über den Tagesverlauf, usw.

Die Erfindung wird nachstehend an Hand der in der Zeichnung dargestellten Ausführungsbeispiele erläutert. Es zeigen:
- Fig. 1: eine erste Ausführungsform eines elektronischen Installationsgerätes zur Ermittlung und Anzeige eines Temperaturzustandes,
- Fig. 2: eine zweite Ausführungsform eines elektronischen Installationsgerätes zur Ermittlung und Anzeige eines Temperaturzustandes,
- Fig. 3: eine dritte Ausführungsform eines elektronischen Installationsgerätes zur Ermittlung und Anzeige eines Temperaturzustandes,
- Fig. 4: eine vierte Ausführungsform eines elektronischen Installationsgerätes zur Ermittlung und Anzeige eines Temperaturzustandes,
- Fig. 5: eine fünfte Ausführungsform eines elektronischen Installationsgerätes zur Ermittlung und Anzeige eines Temperaturzustandes,
- Fig. 6: eine sechste Ausführungsform eines elektronischen Installationsgerätes zur Ermittlung und Anzeige eines Temperaturzustandes,
- Fig. 7: eine siebte Ausführungsform eines elektronischen Installationsgerätes zur Ermittlung und Anzeige eines Temperaturzustandes,
- Fig. 8: eine Sicht auf ein und eine Seitenansicht eines elektronischen Installationsgeräts zur Ermittlung und Anzeige eines Temperaturzustandes in zweiteiliger Ausführungsform,
- Fig. 9: eine perspektivische Sicht auf ein Anzeigeteil,
- Fig. 10: eine perspektivische Sicht auf ein Anzeigeteil mit Rahmen,
- Fig. 11: eine Systemübersicht sowie Montageübersicht betreffend ein zweiteiliges elektronisches Installationsgerät zur Ermittlung und Anzeige eines Temperaturzustandes,
- Fig. 12: eine Systemübersicht sowie Montageübersicht betreffend ein einteiliges elektronisches Installationsgerät zur Ermittlung und Anzeige eines Temperaturzustandes,
- Fig. 13: Ansichten auf ein zweiteiliges und einteiliges elektronisches Installationsgerät zur Ermittlung und Anzeige eines Temperaturzustandes bei unterschiedlicher Temperaturzustand-Visualisierung,
- Fig. 14: Ansichten auf ein zweiteiliges und einteiliges elektronisches Installationsgerät zur Ermittlung und Anzeige eines Temperaturzustandes bei unterschiedlicher Temperaturzustand-Visualisierung und Zusatz-Anzeigen.

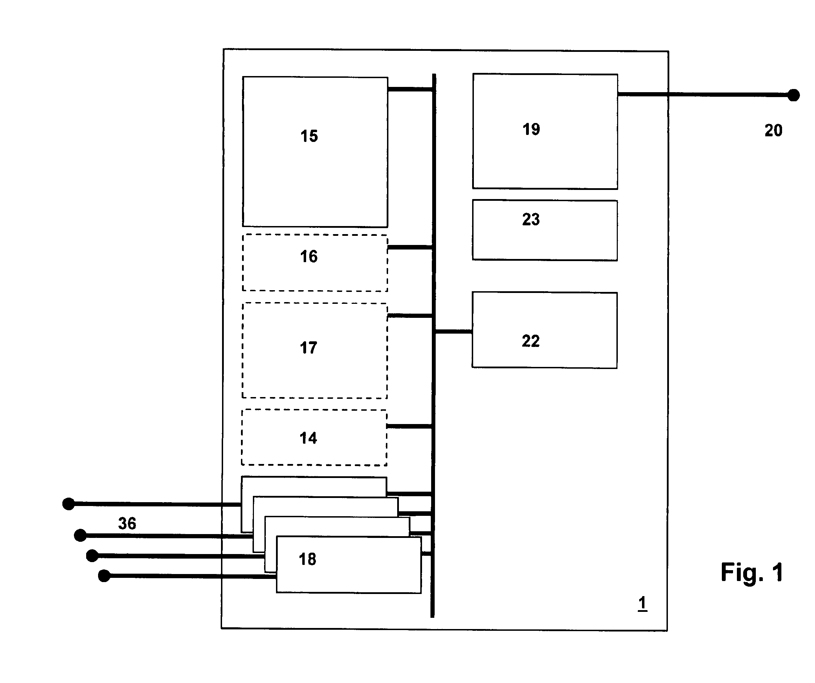

In Fig. 1 ist eine erste Ausführungsform eines elektronischen Installationsgerätes zur Ermittlung und Anzeige eines Temperaturzustandes dargestellt. Das insbesondere auch als "Stand-Alone- Installationsgerät" geeignete elektronische Installationsgerät 1 umfasst
- eine Anzeigeeinheit 15;
- optional einen Lautsprecher 16, um die visuelle Anzeige mittels Anzeigeeinheit 15 akustisch zu ergänzen;
- optional ein Bedienelement 17, z. B. in Form mindestens eines Tasters, einer Schaltwippe oder in Form eines Touch Screen, wobei mittels des Bedienelementes 17 Daten eingegeben werden können oder die Anzeigeeinheit 15 individuell entsprechend dem Anwendungsfall und dem Einsatzort eingerichtet werden kann;
- optional / alternativ mindestens eine kabellose oder kabelgebundene Erfassungs-Schnittstelle 18 zum Anschluss mindestens eines externen Temperatursensors / eines externen Erfassungsgerätes / eines externen HVAC-Gerätes 36, oder alternativ einen im Installationsgerät selbst integrierten Temperatursensor 14;
- ein Netzteil 19, welches an eine externe Spannungsversorgung 20, z. B. an ein 230V-Wechselspannungsnetz, angeschlossen ist oder alternativ hierzu eine Batterie 23;
- eine Steuerlogik/Auswertung/Verarbeitung 22;

Die Baueinheiten 14, 15, 16, 17, 18, 22 sind über Datenleitungen miteinander verbunden. Das Netzteil 19 versorgt alle Baueinheiten des elektronischen Installationsgeräts 1.

Die Anzeigeeinheit 15 kann aus LEDs aufgebaut sein, z. B. in Form einer Ampel oder über eine flächige Anzeige aus LCD und/oder LED-Hinterleuchtung oder auf Basis einer OLED-Anzeige, die entweder eine LCD-Anzeige farbig hinterleuchtet oder die Information in Farbe und Text (Text- / Grafikdisplay) anzeigt, bestehen.

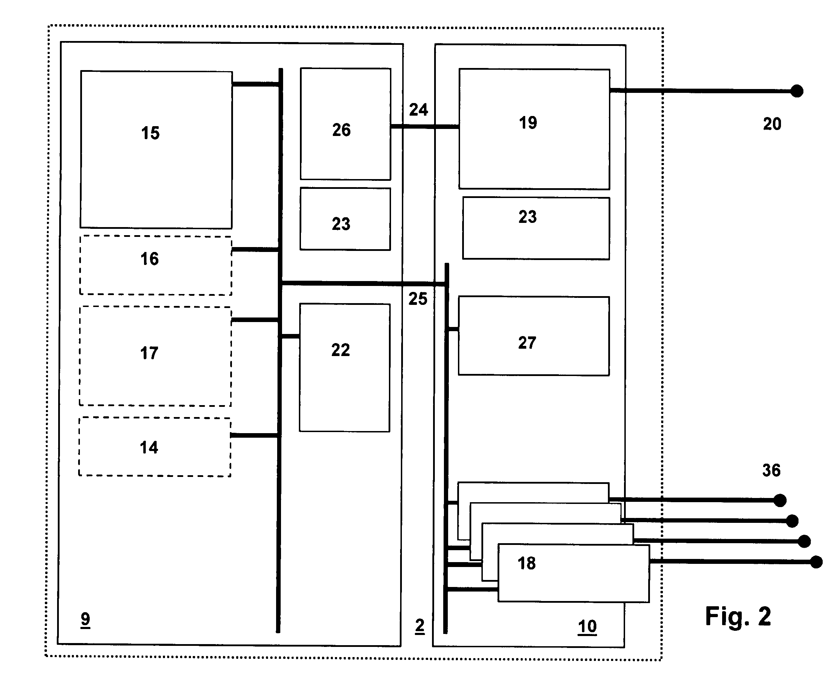

In Fig. 2 ist eine zweite Ausführungsform eines elektronischen Installationsgerätes zur Ermittlung und Anzeige eines Temperaturzustandes dargestellt. Das elektronische Installationsgerät 2 besteht aus einem Anzeigeteil 9 und einer hiervon separierbaren UP-Einheit 10, wobei diese beiden Baueinheiten über eine Spannungsschnittstelle 24 und eine Datenschnittstelle 25 miteinander verbindbar sind, (vorzugsweise mittels eines Stecksystems. Das Anzeigeteil 9 umfasst
- die Anzeigeeinheit 15;
- optional den Lautsprecher 16;
- optional das Bedienelement 17;
- die Steuerlogik/Auswertung/Verarbeitung 22;
- ein Netzteil 26, alternativ eine Batterie 23.

Die UP-Einheit 10 umfasst
- optional / alternativ mindestens eine kabellose oder kabelgebundene Erfassungs-Schnittstelle 18 zum Anschluss mindestens eines externen Temperatursensors / eines externen Erfassungsgerätes / eines externen HVAC-Gerätes 36 oder alternativ einen im Anzeigeteil integrierten Temperatursensor 14 ;
- das an die externe Spannungsversorgung 20 angeschlossene Netzteil 19, alternativ eine Batterie 23;
- eine Steuerlogik/Auswertung/Verarbeitung 27.

Die Baueinheiten 14, 15, 16, 17, 18, 22, 23, 27 sind (bei verbundener Datenschnittstelle 25) über Datenleitungen miteinander verbunden. Das Netzteil 19 versorgt alle Baueinheiten der UP-Einheit 10 und das Netzteil 26, welches alle Baueinheiten des Anzeigeteils 9 versorgt.

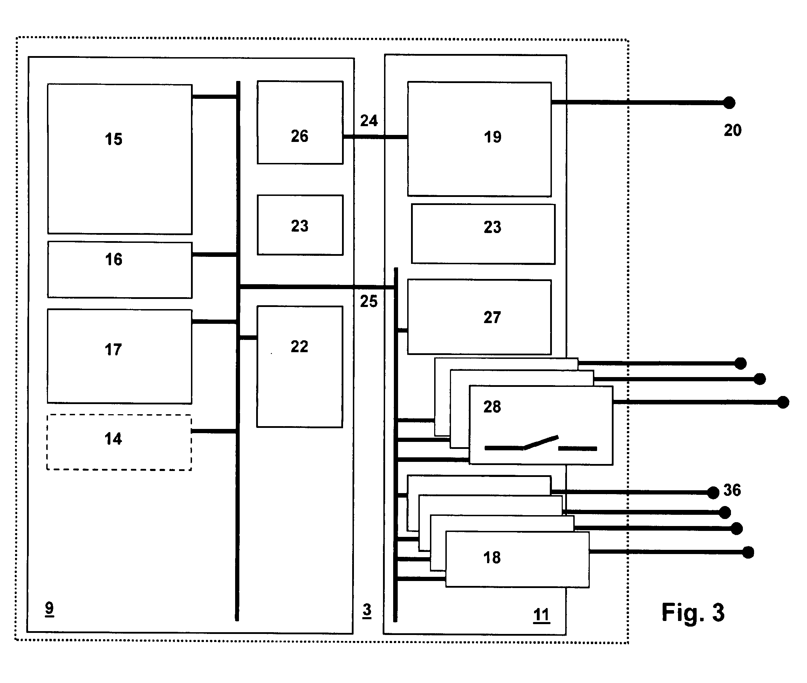

In Fig. 3 ist eine dritte Ausführungsform eines elektronischen Installationsgerätes zur Ermittlung und Anzeige eines Temperaturzustandes dargestellt. Das elektronische Installationsgerät 3 besteht aus dem Anzeigeteil 9 und einer hiervon separierbaren UP-Einheit 11, wobei diese beiden Baueinheiten über die Spannungsschnittstelle 24 und die Datenschnittstelle 25 miteinander verbindbar sind. Die Ausbildung des Anzeigeteils 9 ist bereits vorstehend unter Fig. 2 erläutert.

Die UP-Einheit 11 umfasst
- optional / alternativ mindestens eine kabellose oder kabelgebundene Erfassungs-Schnittstelle 18 zum Anschluss mindestens eines externen Temperatursensors / eines externen Erfassungsgerätes / eines externen HVAC-Gerätes 36 oder alternativ einen im Anzeigeteil 9 integrierten Temperatursensor 14;
- das an die externe Spannungsversorgung 20 angeschlossene Netzteil 19, alternativ die Batterie 23;
- die Steuerlogik/Auswertung/Verarbeitung 27;
- mindestens einen Schaltausgang 28, um in Abhängigkeit der erfassten Temperaturzustände externe Schaltvorgänge auszulösen, beispielsweise das Einschalten / Ausschalten eines Ventilators.

Die Baueinheiten 14, 15, 16, 17, 18, 22, 27, 28 sind (bei verbundener Datenschnittstelle 25) über Datenleitungen miteinander verbunden. Das Netzteil 19 versorgt alle Baueinheiten der UP-Einheit 11 und das Netzteil 26, welches alle Baueinheiten des Anzeigeteils 9 versorgt.

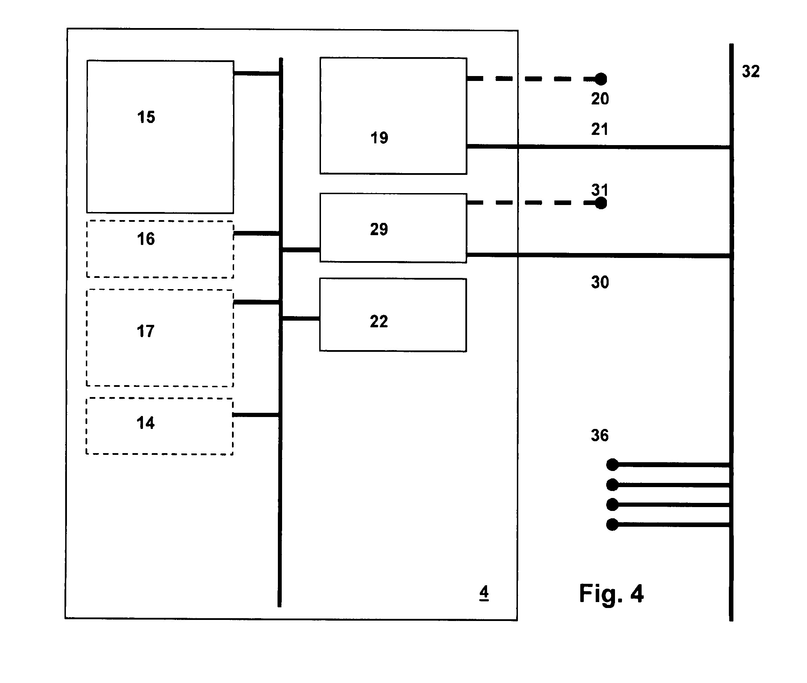

In Fig. 4 ist eine vierte Ausführungsform eines elektronischen Installationsgerätes zur Ermittlung und Anzeige eines Temperaturzustandes dargestellt. Das elektronische Installationsgerät 4 umfasst
- die Anzeigeeinheit 15,
- optional den Lautsprecher 16,
- optional das Bedienelement 17,
- das Netzteil 19, welches an die externe Spannungsversorgung 20 oder optional an eine Spannungsversorgung 21 über Busspannung angeschlossen ist, z. B. PoE - "Power over Ethernet" oder KNX,
- die Steuerlogik/Auswertung/Verarbeitung 22,
- eine Busanbindung 29 für einen digitalen Busanschluss 30 an ein Netzwerk/Bussystem 32 zur Steuer- und Datenübertragung, wobei alternativ eine Drahtlosverbindung 31 zum Netzwerk/Bussystem 32 einsetzbar ist.

An das Netzwerk/Bussystem 32 ist optional /alternativ mindestens ein externer Temperatursensor / ein externes Erfassungsgerät / ein externes HVAC-Gerät 36 kabelgebunden oder kabellos angeschlossen. Alternativ ist das elektronische Installationsgerät 4 mit dem Temperatursensor 14 ausgerüstet. Die Baueinheiten 14, 15, 16, 17, 22, 29 sind über Datenleitungen miteinander verbunden. Das Netzteil 19 versorgt alle Baueinheiten des elektronischen Installationsgeräts 4.

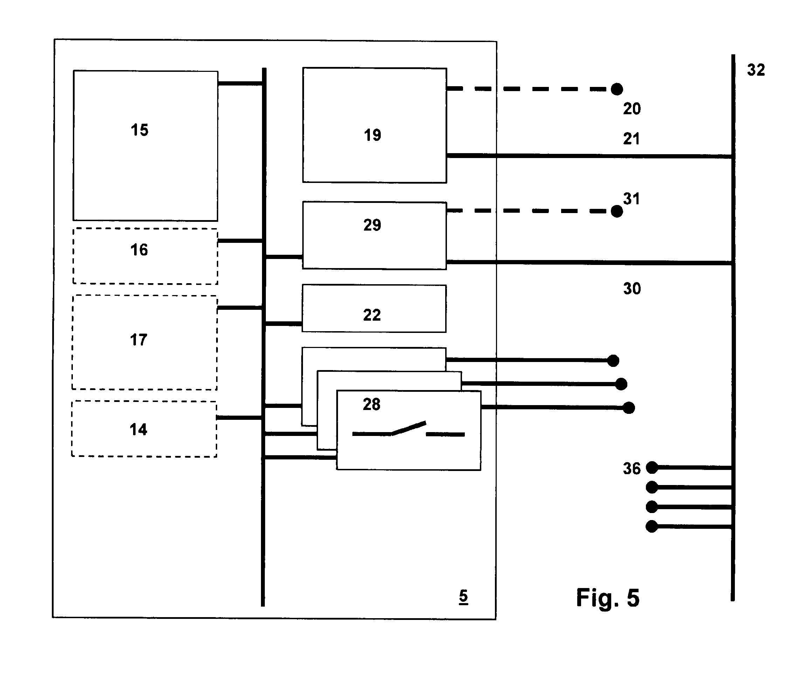

In Fig. 5 ist eine fünfte Ausführungsform eines elektronischen Installationsgerätes zur Ermittlung und Anzeige eines Temperaturzustandes dargestellt. Das elektronische Installationsgerät 5 umfasst
- die Anzeigeeinheit 15,
- optional den Lautsprecher 16,
- optional das Bedienelement 17,
- das Netzteil 19, welches an die externe Spannungsversorgung 20 oder optional an die Spannungsversorgung 21 über Busspannung angeschlossen ist,
- die Steuerlogik/Auswertung/Verarbeitung 22,
- die Busanbindung 29 für einen digitalen Busanschluss 30 an das Netzwerk/Bussystem 32, wobei alternativ eine Drahtlosverbindung 31 zum Netzwerk/Bussystem 32 einsetzbar ist,
- mindestens einen Schaltausgang 28.

An das Netzwerk/Bussystem 32 ist optional / alternativ mindestens ein externer Temperatursensor / ein externes Erfassungsgerät / ein externes HVAC-Gerät 36 kabelgebunden oder kabellos angeschlossen. Alternativ ist das elektronische Installationsgerät 5 mit dem Temperatursensor 14 ausgerüstet. Die Baueinheiten 14, 15, 16, 17, 22, 28, 29 sind über Datenleitungen miteinander verbunden. Das Netzteil 19 versorgt alle Baueinheiten des elektronischen Installationsgeräts 5.

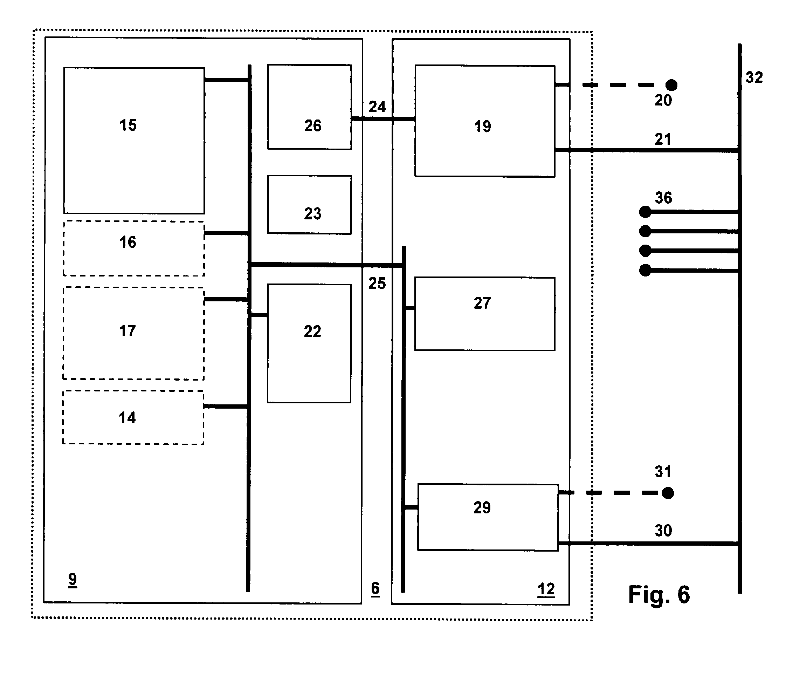

In Fig. 6 ist eine sechste Ausführungsform eines elektronischen Installationsgerätes zur Ermittlung und Anzeige eines Temperaturzustandes dargestellt. Das elektronische Installationsgerät 6 besteht aus dem Anzeigeteil 9 und einer hiervon separierbaren UP-Einheit 12, wobei diese beiden Baueinheiten über die Spannungsschnittstelle 24 und die Datenschnittstelle 25 miteinander verbindbar sind. Die Ausbildung des Anzeigeteils 9 ist bereits vorstehend unter Fig. 2 erläutert.

Die UP-Einheit 12 umfasst
- das Netzteil 19, welches an die externe Spannungsversorgung 20 oder optional an die Spannungsversorgung 21 über Busspannung angeschlossen ist,
- die Steuerlogik/Auswertung/Verarbeitung 27,
- die Busanbindung 29 für den digitalen Busanschluss 30 an das Netzwerk/Bussystem 32, wobei alternativ die Drahtlosverbindung 31 zum Netzwerk/Bussystem 32 einsetzbar ist.

An das Netzwerk/Bussystem 32 ist optional / alternativ mindestens ein externer Temperatursensor / ein externes Erfassungsgerät / ein externes HVAC-Gerät 36 kabelgebunden oder kabellos angeschlossen. Alternativ ist das elektronische Installationsgerät 6 mit dem Temperatursensor 14 ausgerüstet. Die Baueinheiten 14, 15, 16, 17, 22, 27, 29 sind (bei verbundener Datenschnittstelle 25) über Datenleitungen miteinander verbunden. Das Netzteil 19 versorgt alle Baueinheiten der UP-Einheit 12 und das Netzteil 26, welches alle Baueinheiten des Anzeigeteils 9 versorgt.

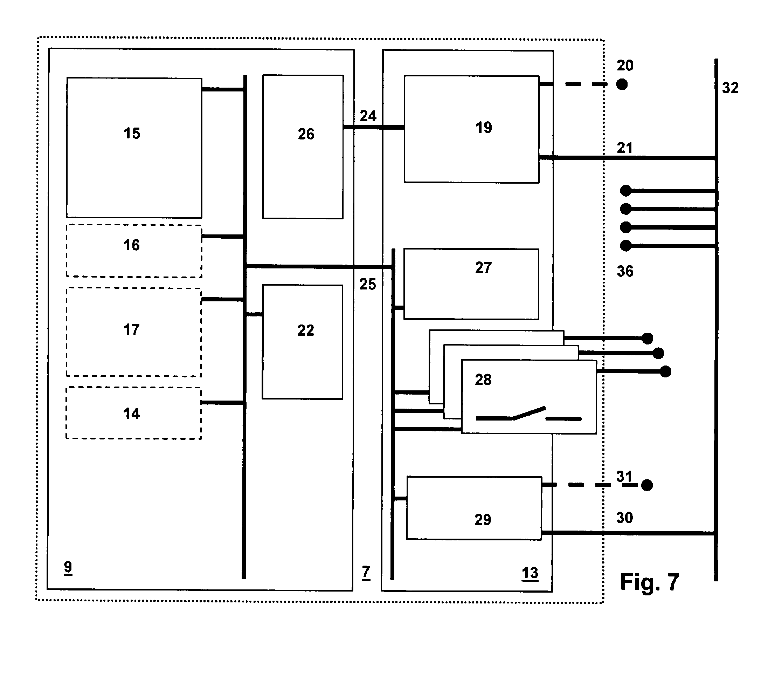

In Fig. 7 ist eine siebte Ausführungsform eines elektronischen Installationsgerätes zur Ermittlung und Anzeige eines Temperaturzustandes dargestellt. Das elektronische Installationsgerät 7 besteht aus dem Anzeigeteil 9 und einer hiervon separierbaren UP-Einheit 13, wobei diese beiden Baueinheiten über die Spannungsschnittstelle 24 und die Datenschnittstelle 25 miteinander verbindbar sind. Die Ausbildung des Anzeigeteils 9 ist bereits vorstehend unter Fig. 2 erläutert.

Die UP-Einheit 13 umfasst
- das Netzteil 19, welches an die externe Spannungsversorgung 20 oder optional an die Spannungsversorgung 21 über Busspannung angeschlossen ist,
- die Steuerlogik/Auswertung/Verarbeitung 27,
- mindestens einen Schaltausgang 28,
- die Busanbindung 29 für den digitalen Busanschluss 30 an das Netzwerk/Bussystem 32, wobei alternativ die Drahtlosverbindung 31 zum Netzwerk/Bussystem 32 einsetzbar ist.

An das Netzwerk/Bussystem 32 ist optional / alternativ mindestens ein externer Temperatursensor / ein externes Erfassungsgerät / ein externes HVAC-Gerät 36 kabelgebunden oder kabellos angeschlossen. Alternativ ist das elektronische Installationsgerät 7 mit dem Temperatursensor 14 ausgerüstet. Die Baueinheiten 14, 15, 16, 17, 22, 27, 28, 29 sind (bei verbundener Datenschnittstelle 25) über Datenleitungen miteinander verbunden. Das Netzteil 19 versorgt alle Baueinheiten der UP-Einheit 13 und das Netzteil 26, welches alle Baueinheiten des Anzeigeteils 9 versorgt.

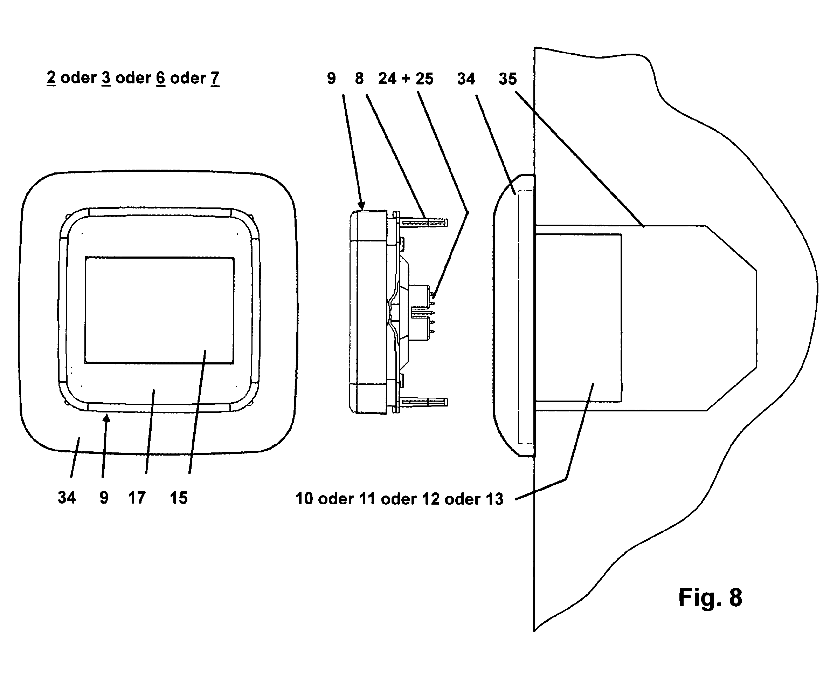

In Fig. 8 ist eine Sicht auf ein und eine Seitenansicht eines elektronischen Installationsgeräts zur Ermittlung und Anzeige eines Temperaturzustandes dargestellt. Es handelt sich dabei um ein Installationsgerät 2 oder 3 oder 6 oder 7 in zweiteiliger Ausführungsform, gebildet aus einer in einer handelsüblichen, normgerechten UP-Gerätedose 35 (Unterputz-Gerätedose) installierbaren UP-Einheit 10 oder 11 oder 12 oder 13 und einem hiervon separierbaren und mittels Befestigungselementen 8 daran montierbaren Anzeigeteil 9. Das Anzeigeteil 9 ist über eine Spannungsschnittstelle 24 und eine Datenschnittstele 25 mit der UP-Einheit 10 oder 11 oder 12 oder 13 elektrisch kontaktierbar. Eine wesentliche Komponente des Anzeigeteils 9 wird durch eine zur Anzeige eines Temperaturzustandes dienende Anzeigeeinheit 15 gebildet, wobei eine Signalisierung, insbesondere Farbsignalisierung und optional eine zusätzliche Visualisierung von Daten mittels Text oder Grafik erfolgt.

Das Anzeigeteil 9 kann optional ein Bedienelement 17 aufweisen, z. B. in Form eines Tasters / einer Schaltwippe realisiert oder durch Ausbildung der Anzeigeeinheit 15 als Touchscreen. Das Installationsgerät 2 oder 3 oder 6 oder 7 wird komplettiert durch einen Rahmen 34.

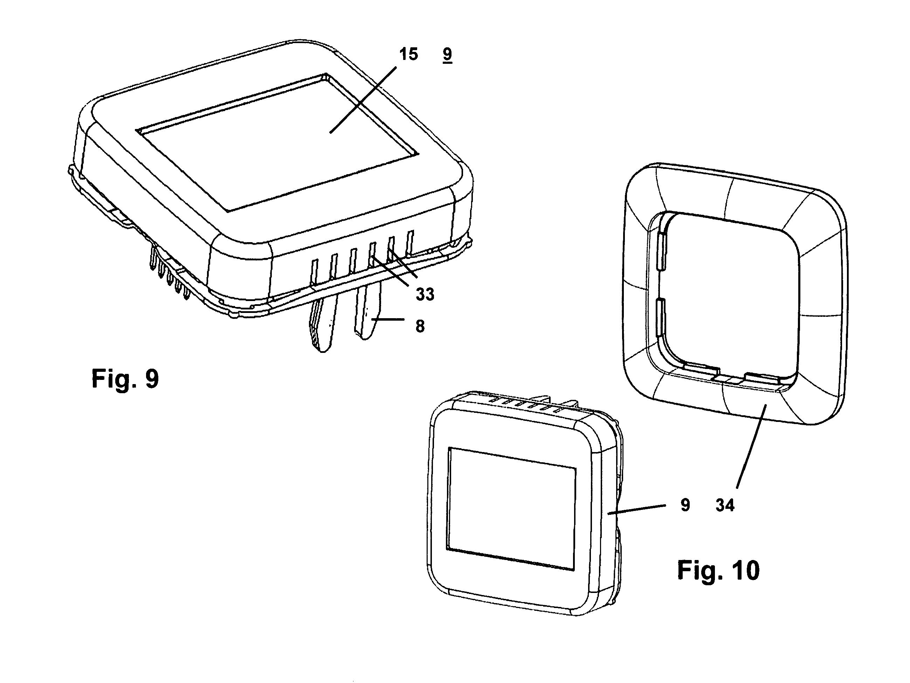

In Fig. 9 ist eine perspektivische Sicht auf ein Anzeigeteil dargestellt. Dabei sind die Anzeigeeinheit 15, die Befestigungselemente 8 sowie Lüftungsschlitze 33 des Anzeigeteils 9 bezeichnet, wobei die Lüftungsschlitze 33 die Funktion haben, dem im Installationsgerät integrierten Temperatursensor 14 Raumluft zuzuführen.

In Fig. 10 ist eine perspektivische Sicht auf ein Anzeigeteil 9 mit Rahmen 34 dargestellt.

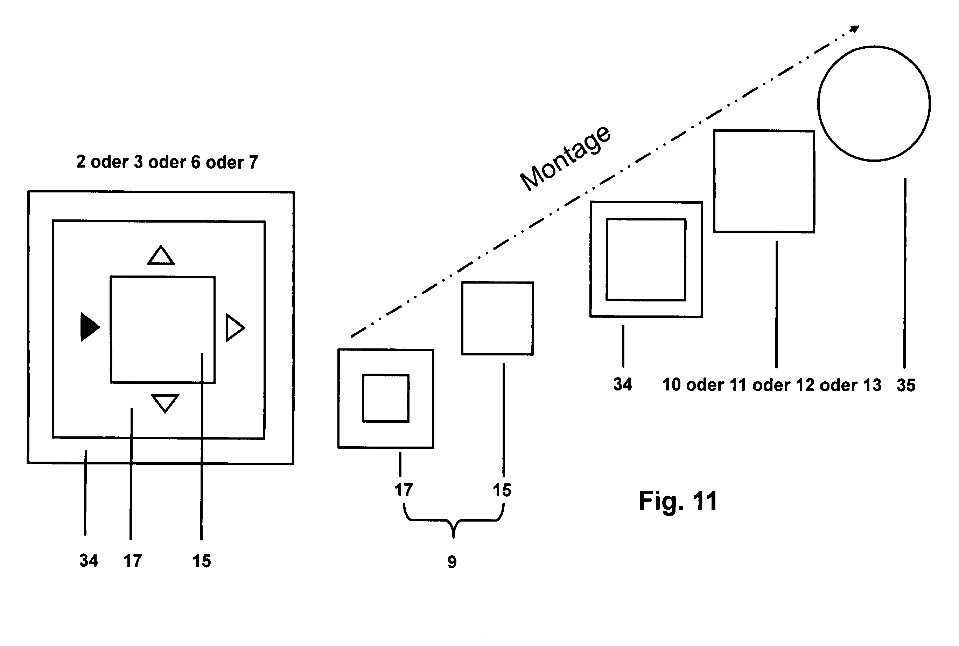

In Fig. 11 ist eine Systemübersicht sowie Montageübersicht betreffend ein zweiteiliges elektronisches Installationsgerät zur Ermittlung und Anzeige eines Temperaturzustandes dargestellt, mit einer UP-Dose 35, in welche ein elektronisches Installationsgerät 2 oder 3 oder 6 oder 7 zu montieren ist, wobei dieses elektronische Installationsgerät 2 oder 3 oder 6 oder 7 aus einem Anzeigeteil 9 - gebildet aus Anzeigeinheit 15 und optional einem Bedienelement 17, - Rahmen 34 und UP-Einheit 10 oder 11 oder 12 oder 13 besteht. Das vorgeschlagene elektronische Installationsgerät 2 oder 3 oder 6 oder 7 eignet sich insbesondere auch zur Kombination mit einem elektrischen Schalter, welcher unter Verwendung des Bedienelements 17, ausgebildet als Schaltwippe / Taster, realisiert wird. Auf diese Weise kann ein bereits installierter konventioneller Schalter (Lichtschalter) gegen das vorgeschlagene elektronische Installationsgerät 2 oder 3 oder 6 oder 7 ausgetauscht werden, welches quasi die Funktion des Lichtschalters zusätzlich übernimmt. Vorteilhaft muss keine weitere UP-Gerätedose installiert werden.

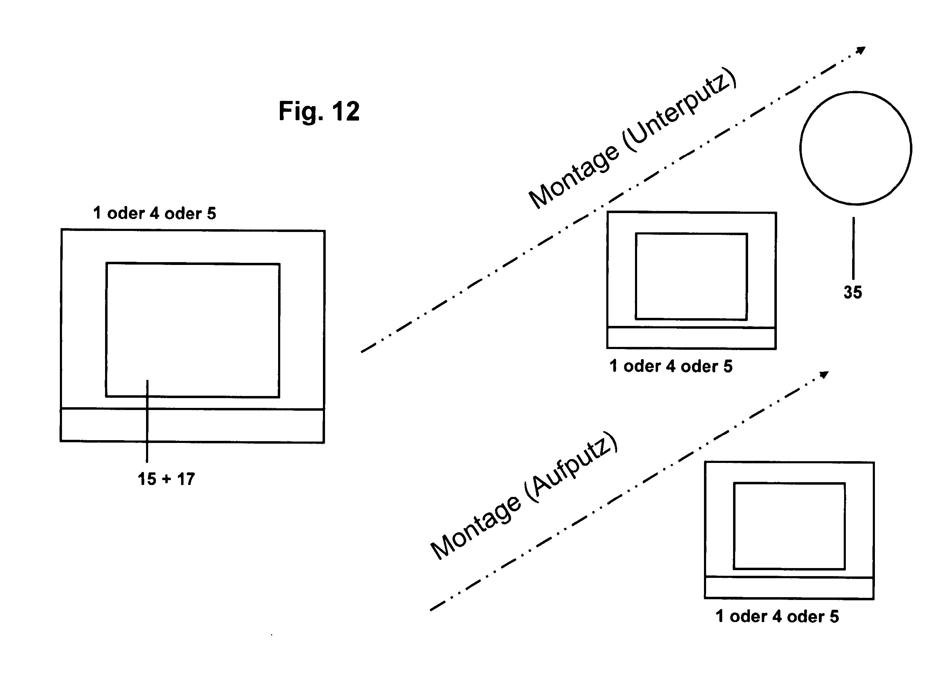

In Fig. 12 ist eine Systemübersicht sowie Montageübersicht betreffend ein einteiliges elektronisches Installationsgerät zur Ermittlung und Anzeige eines Temperaturzustandes dargestellt, mit einer UP-Dose 35 zur Montage eines elektronischen Installationsgerätes 1 oder 4 oder 5 für die Unterputz-Ausführung. Bei der Aufputz-Ausführung wird das elektronische Installationsgerät 1 oder 4 oder 5 unmittelbar an einer Wand befestigt. Eine Besonderheit dieser eine Busanbindung aufweisenden Variante ist darin zu sehen, dass vorzugsweise ein Touch Screen eingesetzt ist, welcher sowohl die Funktion einer Anzeigeeinheit 15 als auch die Funktion eines Bedienelementes 17 ausübt. Das vorgeschlagene elektronische Installationsgerät 1 oder 4 oder 5 eignet sich insbesondere als "Stand-Alone- Installationsgerät" in Unterputzversion oder Aufputzversion.

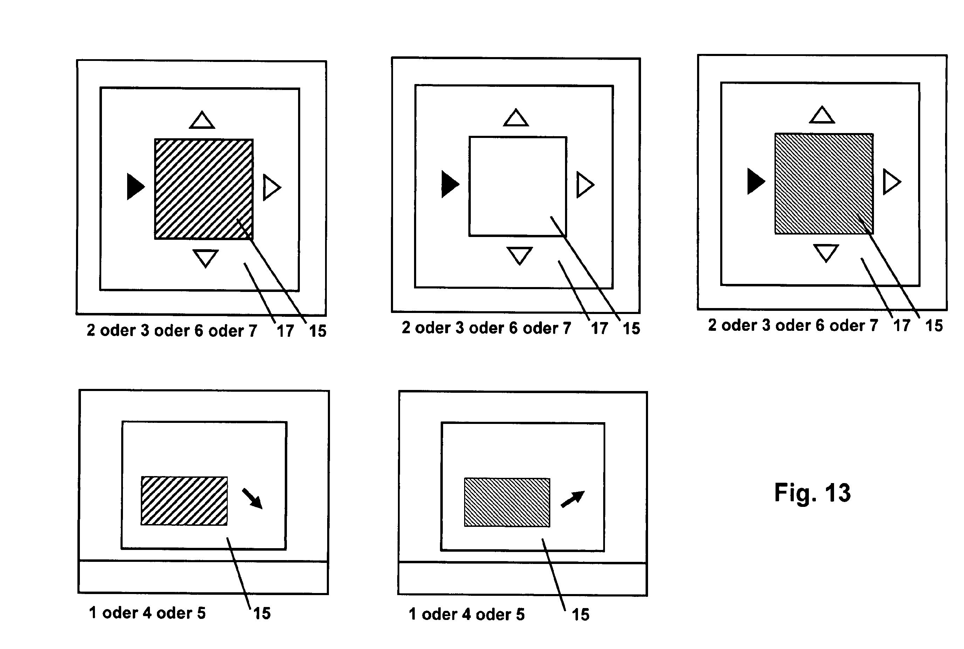

In Fig. 13 sind Ansichten auf ein zweiteiliges und einteiliges elektronisches Installationsgerät zur Ermittlung und Anzeige eines Temperaturzustandes bei unterschiedlicher Temperaturzustand-Visualisierung dargestellt. Die gezeigte Variante stellt quasi eine Basis-Ausführungsform dar, welche die Temperaturzustände
- Abkühlungsphase: Temperatur fällt
- Aufheizphase: Temperatur steigt
- oberer Temperatur-Umkehrpunkt: Übergang von der Aufheizphase zur Abkühlungsphase
- unterer Temperatur-Umkehrpunkt: Übergang von der Abkühlungsphase zur Aufheizphase
ermitteln und anzeigen, d. h. farbig signalisieren kann. Gemäß einer Varianten bei den elektronischen Installationsgeräten 2 oder 3 oder 6 oder 7 kann eine optional realisierbare Schalter-Funktion (Lichtschalter) mittels des Bedienelements 17 betätigt werden. Es zeigen:
- obere Reihe, linkes Bild ein elektronisches Installationsgerät 2 oder 3 oder 6 oder 7 mit einer Anzeigeeinheit 15 mit blauer Farbsignalisierung zur Kennzeichnung des Temperaturzustandes "Abkühlungsphase";
- obere Reihe, mittleres Bild ein elektronisches Installationsgerät 2 oder 3 oder 6 oder 7 mit einer Anzeigeeinheit 15 mit weißer Farbsignalisierung zur Kennzeichnung des Temperaturzustandes "oberer Temperatur-Umkehrpunkt" oder mit grauer Farbsignalisierung zur Kennzeichnung des Temperaturzustandes "unterer Temperatur-Umkehrpunkt":
- obere Reihe, rechtes Bild ein elektronisches Installationsgerät 2 oder 3 oder 6 oder 7 mit einer Anzeigeeinheit 15 mit roter Farbsignalisierung zur Kennzeichnung des Temperaturzustandes "Aufheizphase";
- untere Reihe, linkes Bild ein elektronisches Installationsgerät 1 oder 4 oder 5 mit einer Anzeigeeinheit 15 mit blauer Farbsignalisierung und nach schräg unten weisendem Pfeil zur Kennzeichnung des Temperaturzustandes "Abkühlungsphase";
- untere Reihe, mittleres Bild ein elektronisches Installationsgerät 1 oder 4 oder 5 mit einer Anzeigeeinheit 15 mit roter Farbsignalisierung und nach schräg oben weisendem Pfeil zur Kennzeichnung des Temperaturzustandes "Aufheizphase".

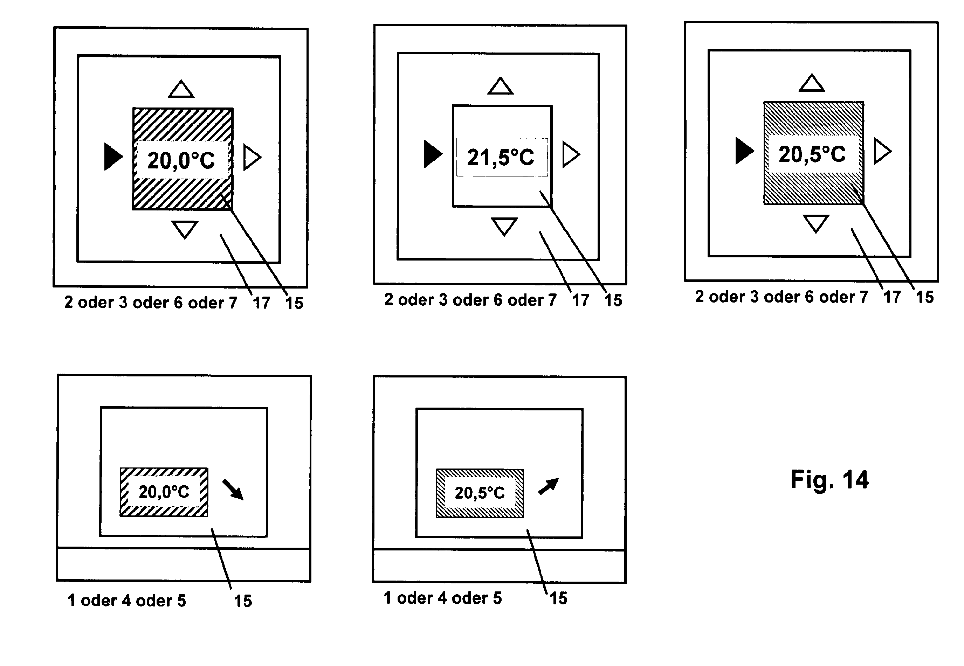

In Fig. 14 sind Ansichten auf ein zweiteiliges und einteiliges elektronisches Installationsgerät zur Ermittlung und Anzeige eines Temperaturzustandes bei unterschiedlicher Temperaturzustand-Visualisierung und Zusatz-Anzeigen dargestellt. Im Vergleich zur Basis-Ausführung gemäß Fig. 13 sind weitere Anzeige- und Steuerfunktionen möglich. Zusätzlich kann nicht nur die Funktion eines elektrischen Schalters (Lichtschalters), sondern auch die Funktion eines Raumtemperaturreglers erfüllt werden. Es zeigen:
- obere Reihe, linkes Bild ein elektronisches Installationsgerät 2 oder 3 oder 6 oder 7 mit einer Anzeigeeinheit 15 mit blauer Farbsignalisierung zur Kennzeichnung des Temperaturzustandes "Abkühlungsphase" und zusätzlicher Anzeige der aktuellen Raumlufttemperatur von 20,0°C;
- obere Reihe, mittleres Bild ein elektronisches Installationsgerät 2 oder 3 oder 6 oder 7 mit einer Anzeigeeinheit 15 mit weißer Farbsignalisierung zur Kennzeichnung des Temperaturzustandes "oberer Temperatur-Umkehrpunkt" oder mit grauer Farbsignalisierung zur Kennzeichnung des Temperaturzustandes "unterer Temperatur-Umkehrpunkt" und zusätzlicher Anzeige der aktuellen Raumlufttemperatur von 21,5°C:

- obere Reihe, rechtes Bild ein elektronisches Installationsgerät 2 oder 3 oder 6 oder 7 mit einer Anzeigeeinheit 15 mit roter Farbsignalisierung zur Kennzeichnung des Temperaturzustandes "Aufheizphase" und zusätzlicher Anzeige der aktuellen Raumlufttemperatur von 20,5°C;
- untere Reihe, linkes Bild ein elektronisches Installationsgerät 1 oder 4 oder 5 mit einer Anzeigeeinheit 15 mit blauer Farbsignalisierung und nach schräg unten weisendem Pfeil zur Kennzeichnung des Temperaturzustandes "Abkühlungsphase" und zusätzlicher Anzeige der aktuellen Raumlufttemperatur von 20,0°C;
- untere Reihe, mittleres Bild ein elektronisches Installationsgerät 1 oder 4 oder 5 mit einer Anzeigeeinheit 15 mit roter Farbsignalisierung und nach schräg oben weisendem Pfeil zur Kennzeichnung des Temperaturzustandes "Aufheizphase" und zusätzlicher Anzeige der aktuellen Raumlufttemperatur von 20,5°C.

Als zusätzliche Anzeige können außer dem aktuellen Temperaturzustand folgende Informationen dargestellt werden:
- aktuelle Raumlufttemperatur;
- Ist-Temperatur;
- eingestellte Soll-Temperatur;
- Heiz- oder Kühlfunktion aktiv oder inaktiv;
- Ventilation / Lüftung an oder aus.

Das elektronische Installationsgerät 2 oder 3 oder 6 oder 7 kann in einen Anzeigeteil 9 und eine hiervon separierbare, in eine normgerechte UP-Dose montierbare UP-Einheit 10 oder 11 oder 12 oder 13 aufgeteilt werden, wobei diese beiden Einheiten mittels Spannungsschnittstellen 24 und Datenschnittstellen 25 miteinander verbindbar sind, wie vorstehend bereits erwähnt. Die Auswahl des Anzeigeteils 9 und des Rahmens 34 (Abdeckrahmen) des elektronischen Installationsgerätes 2 oder 3 oder 6 oder 7 kann nach Wunsch aus unterschiedlichen Installationsgeräte-Programmen mit unterschiedlichem Design und unterschiedlicher Farbgebung erfolgen. Derartige Unterputzprogramme für ein Elektro-Installationssystem sind in unterschiedlicher Formgebung, unterschiedlicher Farbgebung und unter Einsatz unterschiedlicher Materialien (z. B. Kunststoff, Edelstahl) verfügbar. Auf diese Weise wird das elektronische Installationsgerät 2 oder 3 oder 6 oder 7 harmonisch in ein Unterputz-Programm integriert und stellt keinen "Fremdkörper" im Hinblick auf Steckdosen, Schalter, Dimmer, Tastsensoren und Bewegungsmelder dar. Des Weiteren kann das elektronische Installationsgerät 2 oder 3 oder 6 oder 7 in Mehrfach-Kombinationen (z. B. 2fach-Kombination, 3fach-Kombination, 4fach-Kombination) zusammen mit Schaltern, Dimmer usw. eingesetzt werden. Ferner ergeben sich eine Vielzahl unterschiedlicher Kombinationsmöglichkeiten, z. B. im Hinblick auf mögliche Farb-Kombinationen.

Nachfolgend zusammenfassend wesentliche Kriterien bei den vielfältigen Ausführungsformen der elektronischen Installationsgeräte 1 - 7 zur Ermittlung und Anzeige eines Temperaturzustandes:

Die vorgeschlagenen elektronischen Installationsgeräte zur Ermittlung und Anzeige eines Temperaturzustandes können in unterschiedlichen Gerätevarianten realisiert werden:
- als eigenständiges Installationsgerät - nur mit Anzeige und ohne Regelfunktion - in Unterputz oder Aufputzversion;
- als kombiniertes Installationsgerät - kombiniert mit einem elektrischen Schalter;
- als integraler Bestandteil eines Temperaturreglers (Variante als Temperaturregler und nicht als elektrischer Schalter);
- in Kombination mit den Varianten:
   ○ Basisvariante: ermöglicht, die Abkühlungs- und Aufheizphasen sowie den oberen und unteren Temperatur-Umkehrpunkt zu ermitteln und farbig zu signalisieren sowie den dazu benötigten Energieeinsatz anzuzeigen;
   ○ gehobene Variante: zusätzliche zur Basisvariante sind weitere Anzeige- und Steuerfunktionen möglich (z.B. Anzeige der Ist-Temperatur, Soll-Temperatur, Heiz- oder Kühlfunktion ein/aus, Ventilation ein/aus).

In allen Fällen steht die vorgeschlagene Art der Visualisierung eines Temperaturzustandes im Vordergrund und die unterschiedlichen Gerätekonzepte sind dieser als nachgelagert anzusehen.

Die vorgeschlagenen elektronischen Installationsgeräte zur Ermittlung und Anzeige eines Temperaturzustandes ermöglichen somit über die Farblichtgestaltung, auf verschiedene Raum- oder Gebäudetemperaturphasen hinzuweisen. z.B. auf
- eine aktuell vorliegende Abkühlungsphase → vorzugsweise dargestellt in blauer Farbe;
- eine aktuell vorliegende Aufheizphase → vorzugsweise dargestellt in roter Farbe;
- einen aktuell vorliegenden unteren Temperatur-Umkehrpunkt → vorzugsweise dargestellt in weißer Farbe;
- einen aktuell vorliegenden oberen Temperatur-Umkehrpunkt → vorzugsweise dargestellt in grauer Farbe.

Alternativ können sowohl der untere Temperatur-Umkehrpunkt als auch der obere Temperatur-Umkehrpunkt in grüner Farbe dargestellt werden.

Die vorgeschlagenen elektronischen Installationsgeräte zur Ermittlung und Anzeige eines Temperaturzustandes können als eigenständige Installationsgeräte oder in Form einer zusätzlichen Schalt- bzw. Steuerfunktion realisiert sein:
- als kombiniertes Installationsgerät mit einem elektrischen Schalter;
- als integraler Bestandteil eines Temperaturreglers
- in Kombination mit den unterschiedlichen Varianten:
   ○ Basisvariante: die Abkühlungs- und Aufheizphasen sowie den oberen und unteren Temperatur-Umkehrpunkt werden ermittelt und farbig signalisiert;
   ○ gehobene Variante: mit zusätzlichen weiteren Anzeige- und Steuerfunktionen (z.B. Ist-Temperatur, Soll-Temperatur, Heiz- oder Kühlfunktion, Ventilation).
- in Kombination mit den Varianten:
   ○ Einzelgerät oder Einzelsystem
   ○ Bestandteil eines Hausbussystems

Folgende Definitionen sind dabei allgemein von Wichtigkeit:
- Die Aufheizphase ist dadurch gekennzeichnet, dass die Raum- oder Gebäudetemperatur in einem Zeitintervall (definierter Zeitraum) kontinuierlich ansteigt.
- Die Abkühlungsphase ist dadurch gekennzeichnet, dass die Raum- oder Gebäudetemperatur in einem Zeitintervall (definierter Zeitraum) kontinuierlich zurückgeht.
- Der obere Temperatur-Umkehrpunkt ist dadurch gekennzeichnet, dass die Raum- oder Gebäudetemperatur nach der Aufheizphase in einem Zeitintervall (definierter Zeitraum) konstant bleibt.
- Der untere Temperatur-Umkehrpunkt ist dadurch gekennzeichnet, dass die Raum- oder Gebäudetemperatur nach der Abkühlungsphase in einem Zeitintervall (definierter Zeitraum) konstant bleibt.

Der kontinuierliche und konstante Temperaturverlauf kann dabei auch unstetig über die Zeit sein, jedoch ist der Trend durch bekannte Verfahren zu ermitteln.

Durch diese einfache und allgemein verständliche Art der Rückmeldung kann der Benutzer beispielsweise die Heizungs- oder Kühlanlage frühzeitig vor einer nicht weiteren Benutzung des Raums anhand der ermittelten und angezeigten Temperaturzustände abschalten.

Ebenso ist eine einfache und intuitive Neuparametrierung der Solltemperatur durch den Benutzer möglich, ohne oder nur anhand von Zahlenwerten (z.B. der Ist-Temperatur) möglich. Entspricht die empfundene Raumtemperatur nicht dem gewünschten Klima und befindet sich gleichzeitig der Raum oder das Gebäude in einer der Empfindung entgegengesetzten Phase (Abkühlungs- oder Aufkühlphase) ist die Einstellung der Solltemperatur zu überprüfen und ggf. nachzuführen.

Die durch die Raum- oder Gebäudehülle und deren weitere Beschaffenheit (Ausstattung, Mobiliar, etc.) vorherrschende Temperaturänderungsträgheit wird mit dieser vorgeschlagenen Art der Ermittlung / Anzeige / Rückmeldung einbezogen.

Die Einstellung und Wahrnehmung basiert nicht auf Zahlenwerten für Temperatur, sondern auf einer Farbgebung für die aktuelle Temperatur- und deren zeitliche Entwicklung. Damit ergibt sich ein besseres und einfacheres Verständnis für den Benutzer. Die Farbanzeige ermöglicht die Wahrnehmung der Temperatur hin zu einer relativen, einfach zu verknüpfenden Darstellung
- die Farbe Rot wird gleichgesetzt mit Wärme;
- die Farbe Blau wird gleichgesetzt mit Kälte;
- die Farbe Grün wird gleichgesetzt mit einer konstanten Raumtemperatur z.B. im Übergang zwischen Abkühlen und Aufheizen.

Darüber hinaus ist neben den statischen Farbwerten ebenfalls ein Farbübergang und/oder ein Wechsel der Farbintensität realisierbar, wodurch außer dem aktuellen Temperaturzustand zusätzliche Informationen an den Benutzer weitergegeben werden können, wie beispielsweise eine hohe Farbintensität in der Aufheizphase kurz vor Erreichen des oberen Temperatur-Umkehrpunkts und dann eine geringe Farbintensität bei Eintreten in die Abkühlungsphase nach dem Durchschreiten des oberen Temperatur-Umkehrpunkts. Analog gilt dies für den unteren Temperatur-Umkehrpunkt. Der gleiche Effekt lässt sich durch Farbmischung anstatt der Farbintensität alternativ erzielen.

Ebenso ist es realisierbar, die Temperaturänderungsgeschwindigkeit über die Farbintensität in umgekehrter Weise zu verwenden. Beispielsweise ist bei einer langsamen Aufheiztemperaturänderung ein "leichtes" (wenig auffälliges) Rot zu verwenden, während bei einer schnellen Aufheiztemperaturänderung ein stark leuchtendes Rot zu verwenden ist.

Beliebige Kombinationen aus Farbintensität und Farbmischung lassen sich für folgende Rückmeldezustände verwenden:
- Grad der Temperaturänderung: ermittelte Temperaturänderung in Bezug auf die Zeit - langsam bis schnell;
- Erreichen der Temperatur-Umkehrpunkte: Zeit bis zum Erreichen des Temperatur-Umkehrpunkts - kurze Zeitspanne bis lange Zeitspanne;
- Temperatur-Niveau der Aufheiz- und Abkühlungsphase sowie der Temperatur-Umkehrpunkte: absolute Temperatur während der Phasen - z.B. je höher die Temperatur absolut ist, desto intensiver ist die Farbdarstellung;
- Eingesetzte Energie zur Temperaturkonstanthaltung: bei vorhandenem Rückkanal der Steuerung - z.B. Ventilator-Stufe, Pumpenstufe, Brennerstufe, etc. - z.B. je höher der Energieeinsatz ist, desto intensive ist die Farbdarstellung.

In seiner einfachsten Form besteht das vorgeschlagene elektronische Installationsgerät zur Ermittlung und Anzeige eines Temperaturzustandes aus den folgenden Komponenten:
- einer Anzeigeeinheit 15 zur Signalisierung: Farbsignalisierung der Temperaturphasen / Temperaturzustände;
- einem Temperatursensor 14;
- einer Steuerlogik/Auswertung/Verarbeitung 22;
- einem Netzteil 19

Die Spannungsversorgung kann dabei alternativ erfolgen:
- über einen Netzanschluss: externe Spannungsversorgung 20;
- über eine Bussystemversorgung (PoE, KNX): Spannungsversorgung 21 über Busspannung;
- über mindestens eine im elektronischen Installationsgerät integrierte Batterie 23.

Die Berücksichtigung der Raum- oder Gebäudetemperatur kann auf drei unterschiedliche Arten erfolgen, womit drei unterschiedliche Gerätevarianten entstehen (entsprechende Mischformen sind ebenfalls realisierbar):
- Der im elektrischen Installationsgerät integrierte Temperatursensor 14 kann für eine lokale Auswertung herangezogen werden.
- Die Temperaturwerte werden über externe, an Erfassungs-Schnittstellen 18 anzuschließende Temperatursensoren oder Erfassungsgeräte oder HVAC-Geräte dem elektronischen Installationsgerät und damit seiner Anzeigeeinheit (Farbanzeige) 15 zugeführt.
- Die Temperaturwerte werden über das Bussystem 32 dem elektronischen Installationsgerät und damit seiner Anzeigeeinheit (Farbanzeige) 15 zugeführt.

Selbstredend kann das dem Temperaturzustand entsprechende gewonnene Signal (Aufheizphase, Abkühlungsphase, oberer Temperatur-Umkehrpunkt, unterer Temperatur-Umkehrpunkt) auch auf ein Bussystem 32 übertragen werden. Hierdurch kann die Information auch auf andere Anzeigeeinheiten (z. B. "Controlpanel") des Bussystems 32 (Hausbussystem) weitergeleitet werden oder in Kombination mit Haussteuerungsfunktionen genutzt werden.

### Bezugszeichenliste

- 1: elektronisches Installationsgerät zur Ermittlung und Anzeige von Temperaturzuständen (einteilig)
- 2: elektronisches Installationsgerät zur Ermittlung und Anzeige von Temperaturzuständen (zweiteilig 9 + 10)
- 3: elektronisches Installationsgerät zur Ermittlung und Anzeige von Temperaturzuständen (zweiteilig 9 + 11)
- 4: elektronisches Installationsgerät zur Ermittlung und Anzeige von Temperaturzuständen (einteilig)
- 5: elektronisches Installationsgerät zur Ermittlung und Anzeige von Temperaturzuständen (einteilig)
- 6: elektronisches Installationsgerät zur Ermittlung und Anzeige von Temperaturzuständen (zweiteilig 9 + 12)
- 7: elektronisches Installationsgerät zur Ermittlung und Anzeige von Temperaturzuständen (zweiteilig 9 + 13)
- 8: Befestigungselemente
- 9: Anzeigeteil
- 10: UP-Einheit
- 11: UP-Einheit
- 12: UP-Einheit
- 13: UP-Einheit
- 14: Temperatursensor (alternativ)
- 15: Anzeigeeinheit mit Signalisierung, z. B. Farbsignalisierung und optional mit Visualisierung von Daten, z. B. mittels Text oder Grafik
- 16: Lautsprecher (optional)
- 17: Bedienelement (optional), z. B. Taster, Touch Screen
- 18: Erfassungs-Schnittstellen zu externen Sensoren / Erfassungsgeräten /HVAC-Geräten, kabellos oder kabelgebunden
- 19: Netzteil
- 20: externe Spannungsversorgung
- 21: Spannungsversorgung über Busspannung, z. B. PoE - Power over Ethernet oder KNX
- 22: Steuerlogik/AuswertungNerarbeitung
- 23: Batterie
- 24: Spannungsschnittstelle
- 25: Datenschnittstelle
- 26: Netzteil
- 27: Steuerlogik/Auswertung/Verarbeitung
- 28: mindestens ein Schaltausgang (optional)
- 29: Busanbindung
- 30: digitaler Busanschluss für Steuer- und Datenübertragung
- 31: Drahtlosverbindung (alternativ)
- 32: Netzwerk/Bussystem
- 33: Lüftungsschlitze
- 34: Rahmen
- 35: UP-Gerätedose
- 36: externer Sensor / externes Erfassungsgerät / HVAC-Gerät

## Patentansprüche

1. Elektronisches Installationsgerät (1, 2, 3, 4, 5, 6, 7) zur Ermittlung und Anzeige des aktuellen Temperaturzustandes in einem Raum oder in einem Gebäude
• mit mindestens einem im Installationsgerät integrierten Temperatursensor (14) oder mindestens einer Erfassungs-Schnittstelle (18) zum Anschluss mindestens eines externen Temperatursensors / eines externen Erfassungsgerätes (36) oder einer an ein Netzwerk/Bussystem (32) anschließbaren Busanbindung (29) zum Anschluss mindestens eines externen Temperatursensors / eines externen Erfassungsgerätes (36),
• mit mindestens einer Steuerlogik/AuswertungNerarbeitung (22, 27) zur Auswertung von permanent vom Temperatursensor (14) oder Erfassungsgerät (36) empfangenen Temperaturwerten zur Ermittlung eines auf der zeitlichen Entwicklung der Temperaturwerte über einen definierten Zeitraum basierenden aktuellen Temperaturzustandes des Raumes oder des Gebäudes, welcher ausdrückt, ob sich der Raum oder das Gebäude gerade
○ in einer Abkühlungsphase mit fallender Temperatur oder
○ in einer Aufheizphase mit steigender Temperatur oder
○ am oberen Temperatur-Umkehrpunkt mit Übergang von der Aufheizphase zur Abkühlungsphase oder
○ am unteren Temperatur-Umkehrpunkt mit Übergang von der Abkühlungsphase zur Aufheizphase befindet,
• und mit einer Anzeigeeinheit (15) zur Visualisierung des ermittelten Temperaturzustandes.

2. Installationsgerät (2, 3, 6, 7) nach Anspruch 1, **gekennzeichnet durch** eine Aufteilung in einen Anzeigeteil (9) und eine hiervon separierbare, in eine UP-Gerätedose (35) montierte UP-Einheit (10, 11, 12, 13), wobei beide Einheiten mittels Spannungsschnittstellen (24) und Datenschnittstellen (25) miteinander verbindbar sind.

3. Installationsgerät (1, 2, 3, 4, 5, 6, 7) nach Anspruch 1 oder 2, **gekennzeichnet durch** ein Bedienelement (17).

4. Installationsgerät (1, 2, 3, 4, 5, 6, 7) nach einem der vorstehenden Ansprüche, **gekennzeichnet durch** einen Lautsprecher (16).

5. Installationsgerät (1, 2, 3, 4, 5, 6, 7) nach einem der vorstehenden Ansprüche, **gekennzeichnet durch** mindestens einen Schaltausgang (28).

6. Installationsgerät (1, 2, 3, 4, 5, 6, 7) nach einem der vorstehenden Ansprüche, **gekennzeichnet durch** mindestens ein Netzteil (19, 26) zum Anschluss einer externen Spannungsversorgung (20) oder einer Spannungsversorgung (21) über Busspannung.
